# EUROPEAN PATENT SPECIFICATION

(11) **EP 3 809 082 B1**
(45) Date of publication and mention of the grant of the patent: **01.05.2024**
(21) Application number: 19213137.3
(22) Date of filing: 03.12.2019
(51) Int. Cl.: F28D 7/00, F28D 7/08, F28F 7/02

(54) **HEAT EXCHANGER**
WÄRMETAUSCHER
ÉCHANGEUR DE CHALEUR

(30) Priority: 17.10.2019 US 201916655461
(43) Date of publication of application: 21.04.2021
(73) Proprietor: Hamilton Sundstrand Corporation, Charlotte, NC 28217-4578 (US)
(72) Inventor: CLAVETTE, Jeremy, West Hartford, CT 06117 (US); IZARRA, Rafael Alexander, West Simsbury, CT 06092 (US)
(74) Representative: Dehns

(56) References cited:
- EP-A1- 3 663 694
- DE-B3-102017 222 740
- GB-A- 2 565 143
- US-A1- 2004 177 949
- US-A1- 2018 334 952
- US-A1- 2019 285 349

## Description

### BACKGROUND

The present disclosure relates to heat exchangers, and, in particular, heat exchangers with a cross-flow configuration.

Heat exchangers aim to transfer heat between a hot fluid and a cool fluid. To increase the efficiency of heat exchangers, walls and fins are utilized to increase the surface area through which thermal energy can transfer. In cross-flow heat exchangers, pressure loss occurs as the hot fluid or the cold fluid flow through their respective layer. Pressure loss can decrease the overall effectiveness of the heat exchanger. Additionally, cross-flow heat exchangers can experience increased transient thermal stresses from pockets of hot air near layer inlets. EP3663694A1 relates to heat exchanger riblet and turbulator features. US2018/334952A1 relates to an intercooler system including a heat exchanger with a first, second and third layer wherein the second layer is in between the other layers. The first and third layer comprise an overhang each with a base end even with and edge of the second layer; a distal end opposite the base end, wherein the overhang tapers from the base end to the distal end;a first surface extending from the base end to the distal end; a second surface extending from the base end to the distal end, wherein the first surface and the second surface meet at the distal end, and the first surface and the second surface are each corrugated. US2004/177949B2 relates to a heat exchanger. GB2565143B relates to a heat exchanger.

### SUMMARY

A heat exchanger according to claim 1 is provided.

A method of making a heat exchanger according to claim 5 is also provided.

Persons of ordinary skill in the art will recognize that other aspects and embodiments are possible in view of the entirety of the present disclosure, including the accompanying figures.

### BRIEF DESCRIPTION OF THE DRAWINGS

FIG. 1 is a perspective view of a cross-section of a heat exchanger.
FIG. 2 is a cross-sectional side view of the heat exchanger.

### DETAILED DESCRIPTION

The disclosure relates to a cross-flow heat exchanger with overhangs on each layer. The overhangs help guide the fluid into passageways resulting in a decrease of the pressure drop across the heat exchanger. Additionally, the overhangs reduce the transient thermal stress of the heat exchanger by guiding the fluid into the passageways and insulating a large portion of the solid regions on the hot face of the heat exchanger.

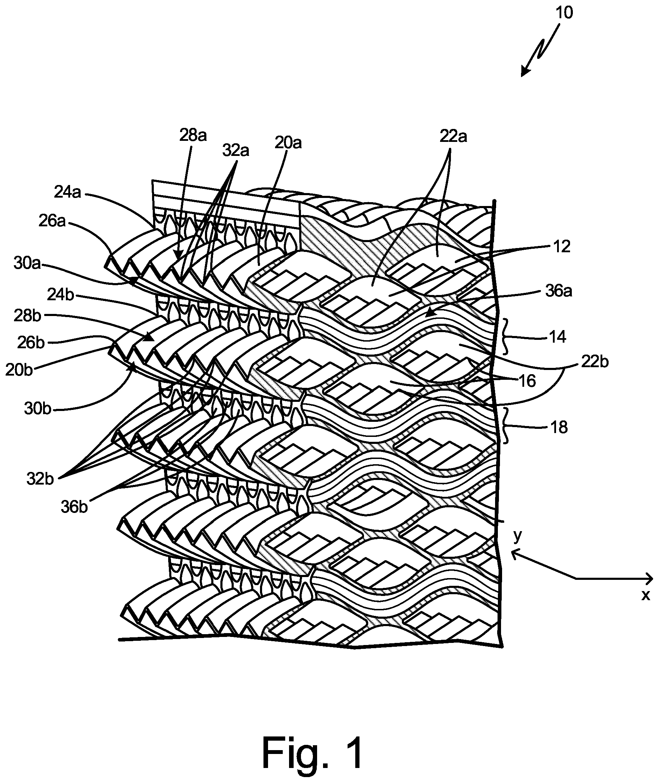

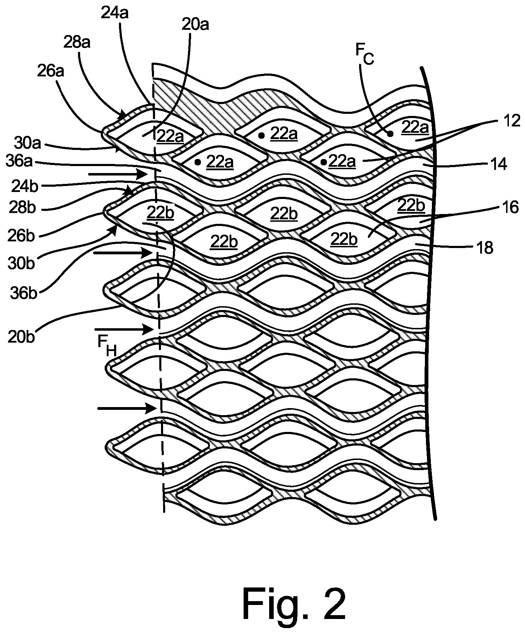

FIGS 1 and 2 will be discussed concurrently. FIG. 1 is a perspective view of a cross-section of heat exchanger 10. FIG. 2 is a side view of a cross-section of heat exchanger 10. FIGS. 1 and 2 include first layer 12, second layer 14, third layer 16, and fourth layer 18. First layer 12, second layer 14, third layer 16, and fourth layer 18 can be made from many different materials including copper, titanium, stainless steel, aluminum, graphite, ceramics, composites, plastics, and/or any other material with a relatively high thermal conductivity. First layer 12, second layer 14, third layer 16, and fourth layer 18 can all be made from the same material, or each layer can be made of a different material.

In the embodiment of FIGS. 1 and 2, first layer 12, second layer 14, third layer 16, and fourth layer 18 each has a triangular edge with a curvature ratio extending in direction X and first layer 12, second layer 14, third layer 16, and fourth layer 18 each has a triangular edge with a curvature ratio extending in direction Y. In other embodiments, first layer 12, second layer 14, third layer 16, and fourth layer 18 each can have a sinusoidal wave shape, or any other repeating pattern extending in direction X and first layer 12, second layer 14, third layer 16, and fourth layer 18 each can have a sinusoidal wave shape, or any other repeating pattern extending in direction Y.

First layer 12 includes overhang 20a and a plurality of passages 22a. Second layer 14 includes a plurality of passages 36a. Third layer 16 includes overhang 20b (overhang 20a and overhang 20b are hereinafter referred to as "overhangs 20") and a plurality of passages 22b (plurality of passages 22a and plurality of passages 22b are hereinafter referred to as "passages 22"). First layer 12 and third layer 16 each extend further in direction X than second layer 14 and fourth layer 18 each extend in direction X, thereby creating overhangs 20. Fourth layer 18 includes a plurality of passages 36b (plurality of passages 36a and plurality of passages 36b are hereinafter referred to as "passages 36"). Second layer 14 and fourth layer 18 can each extend further in direction Y than first layer 12 and third layer 16 to form overhangs (not shown) on second layer 14 and fourth layer 18. In the embodiment of FIGS. 1 and 2, first layer 12 and third layer 16 each guide cold fluid F_{C} through passages 22, while second layer 14 and fourth layer 18 each guide hot fluid F_{H} through passages 36. In another embodiment, first layer 12 and third layer 16 can each guide hot fluid F_{H} through passages 22, while second layer 14 and fourth layer 18 can each guide cold fluid F_{C} through passages 36.

Each overhang 20 includes base end 24, distal end 26, first surface 28, and second surface 30. First surface 28 of overhang 20 and second surface 30 of overhang 20 extend from base end 24 of overhang 20 and come together to a bullnose point at distal end 26 of overhang 20. In other embodiments, first surface 28 of overhang 20 and second surface 30 of overhang 20 can extend from base end 24 of overhang 20 and come together at distal end 26 of overhang 20 in many different shapes, such as a taper point, blunt taper point, taper cut, or any other convex point. First surface 28 of overhang 20 includes a plurality of troughs 32a. Second surface 30 of overhang 20 includes a plurality of troughs 32b (plurality of troughs 32a and plurality of troughs 32b hereinafter referred to as "troughs 32").

Each of troughs 32 is aligned with one of passages 36 to direct hot fluid F_{H} flow from distal end 26 of overhang 20 into passages 36, thus making the transition from distal end 26 of overhang 20 to passages 36 as smooth as possible. Troughs 32a on first surface 28 are offset from troughs 32b of second surface 30 in direction Y. To enable a smooth transition from distal end 26 of overhang 20 to passages 36 troughs 32 increase in amplitude, or height, as troughs 36 extend toward base end of overhang 20. A smooth transition from distal end 26 of overhang 20 to passages 36 decreases the pressure drop across heat exchanger 10. Additionally, a smooth transition from distal end 26 of overhang 20 to passages 36 reduces the impingement of hot air on concave surfaces that expose heat exchanger 10 to transient thermal stresses. Reducing the transient thermal stresses caused the impingement of hot air can reduce permanent deformation in heat exchanger 10 and increase the operating life of heat exchanger 10.

During operation, hot fluid F_{H} can flow through first layer 12 and third layer 16, while cool fluid F_{C} can flow through second layer 14 and fourth layer 18. As hot fluid F_{H} approaches first layer 12 and third layer 16, hot fluid F_{H} will first contact distal end 26 of overhang 20. From distal end 26 troughs 32 can guide hot fluid F_{H} toward base end 24 of overhang 20. Once hot fluid F_{H} reaches base end 24, hot fluid F_{H} enters passages 36. Overhang 20 is configured to make the transition from distal end 26 of overhang 20 to passages 36 as smooth as possible to minimize the pressure loss of heat exchanger 10.

In manufacturing heat exchanger 10 there are many different options to build first layer 12, second layer 14, third layer 16, and fourth layer 18. Heat exchanger 10 can be made through additive manufacturing, which enables heat exchanger 10 to be a unitary monolithic component. Additive manufacturing also enables heat exchanger 10 to be manufactured in a single process step, potentially reducing manufacturing time and cost. In another embodiment, heat exchanger 10 could be joined through brazing, welding, soldering, and/or any other joining method used in the forming of heat exchangers.

### Discussion of Possible Embodiments

The following are non-exclusive descriptions of possible embodiments of the present invention.

In one embodiment of the present disclosure, a heat exchanger includes a first layer, a second layer, and a third layer. The first layer includes a first width W₁ extending in a first direction and a first length L₁ extending in a second direction. The second layer includes a second length L₂ extending in the first direction and a second width W₂ extending in the second direction. The third layer includes a third width W₃ extending in the first direction and a third length L₃ extending in a second direction. The second layer is between the first layer and the third layer. The first length L₁ of the first layer and the third length L₃ of the third layer both extend further in the second direction than the second width W₂ of the second layer. The first layer and the third layer each includes an overhang.

The heat exchanger of the preceding paragraph can optionally include, additionally and/or alternatively, any one or more of the following features, configurations and/or additional components:
the second length L₂ of the second layer extends further in the first direction than the first width W₁ of the first layer and the third width W₃ of the third layer, and wherein the second layer includes an overhang;
the second layer further includes at least one passage extending in the second direction, from an edge of the second layer, through an opposite edge of the second layer, wherein the overhang of the first layer and the overhang of the third layer is configured to direct an airflow into the at least one passage;
the overhang of the first layer further includes a sinusoidal curve in the first direction and a sinusoidal curve in the second direction;
the overhang of the third layer further comprises a sinusoidal curve in the first direction and a sinusoidal curve in the second direction;
the overhang of the second layer includes a sinusoidal curve in the first direction and a sinusoidal curve in the second direction;
the overhang of the first layer and the overhang of the third layer each includes a base end even with an edge of the second layer, a distal end opposite the base end, and the overhang tapers from the base end to the distal end;
a first surface extending from the base end to the distal end, a second surface extending from the base end to the distal end, where the first surface and the second surface meet at the distal end, and the first surface and the second surface are each corrugated;
an at least one trough on the first surface and at least one trough on the second surface, where in each of the at least one troughs extends from the distal end to the base end, and one of the at least one troughs is aligned with a passageway of the second layer;
a first surface extending from the base end to the distal end, a second surface extending from the base end to the distal end, where the first surface and the second surface meet at the distal end, and the first surface and the second surface are each triangular wave shaped; and/or
the first layer, the second layer, and the third layer are constructed by additive manufacturing so that the heat exchanger is one continuous monolithic component.

In another embodiment of the present disclosure, a method for making a heat exchanger includes forming a first layer including a first width W₁ extending in a sinusoidal shape in a first direction and a first length L₁ extending in a sinusoidal shape in a second direction. Forming a second layer including a second length L₂ extending in a sinusoidal shape in the first direction and a second width W₂ extending in a sinusoidal shape in the second direction. Forming a third layer includes a third width W₃ extending in a sinusoidal shape in the first direction and a third length L₃ extending in a sinusoidal shape in the second direction. The second layer is between the first layer and the second layer. The first length L₁ of the first layer and the third length L₃ of the third layer both extend further in the second direction than the second width W₂ of the second layer. The first layer and the third layer each include an overhang. The second length L₂ of the second layer extends further in the first direction than the first width W₁ of the first layer and the third width W₃ of the third layer. The second layer includes an overhang.

The method of making a heat exchanger of the preceding paragraph can optionally include, additionally and/or alternatively, any one or more of the following features, configurations and/or additional components:
forming a fourth layer having a fourth length L₄ extending in a sinusoidal shape in the first direction and a fourth width W₄ extending in a sinusoidal shape in the second direction;
additively manufacturing the first layer, the second layer, the third layer, and the fourth layer; and/or
the first layer, the second layer, the third layer, and the fourth layer are continuous and monolithic.

While the invention has been described with reference to an exemplary embodiment(s), it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A heat exchanger comprising:
a first layer (12), wherein the first layer comprises:
a first width W₁ extending in a first direction; and
a first length L₁ extending in a second direction;
a second layer (14), wherein the second layer comprises:
a second length L₂ extending in the first direction;
a second width W₂ extending in the second direction; and
at least one passage (22) extending in the second direction, from an edge of the second layer, through an opposite edge of the second layer; and
a third layer (16), wherein the third layer comprises a third width W₃ extending in the first direction and a third length L₃ extending in the second direction, wherein the second layer is between the first layer and the third layer, the first length L₁ of the first layer and the third length L₃ of the third layer both extend further in the second direction than the second width W₂ of the second layer, and the first layer and the third layer each comprises an overhang (20);
wherein the overhang of the first layer and the overhang of the third layer each comprises:
a base end (24) even with an edge of the second layer;
a distal end (26) opposite the base end, wherein the overhang tapers from the base end to the distal end;
a first surface (28) extending from the base end to the distal end;
a second surface (30) extending from the base end to the distal end, wherein the first surface and the second surface meet at the distal end, and the first surface and the second surface are each corrugated; and
at least one trough (32) on the first surface and at least one trough on the second surface, wherein each of the at least one troughs extends from the distal end to the base end, and one of the at least one troughs is aligned with a passageway of the second layer; wherein the second length L2 of the second layer extends further in the first direction than the first width W1 of the first layer and the third width W3 of the third layer, and wherein the second layer comprises an overhang (20); and wherein the overhang of the first layer further comprises a sinusoidal curve in the first direction and a sinusoidal curve in the second direction.

2. The heat exchanger of any preceding claim, wherein the overhang of the third layer further comprises a sinusoidal curve in the first direction and a sinusoidal curve in the second direction.

3. The heat exchanger of claim 1 or any claim dependent thereon, wherein the overhang of the second layer comprises a sinusoidal curve in the first direction and a sinusoidal curve in the second direction.

4. The heat exchanger of any preceding claim, wherein the first layer, the second layer, and the third layer are constructed by additive manufacturing so that the heat exchanger is one continuous and monolithic component.

5. A method of making a heat exchanger according to claim 1, the method comprising:
forming a first layer comprising a first width W₁ extending in a sinusoidal shape in a first direction and a first length L₁ extending in a sinusoidal shape in a second direction;
forming a second layer comprising a second length L₂ extending in a sinusoidal shape in the first direction and a second width W₂ extending in a sinusoidal shape in the second direction; and
forming a third layer comprising a third width W₃ extending in a sinusoidal shape in the first direction and a third length L₃ extending in a sinusoidal shape in the second direction, wherein the second layer is between the first layer and the second layer, and wherein the first length L₁ of the first layer and the third length L₃ of the third layer both extend further in the second direction than the second width W₂ of the second layer and the first layer and the third layer each comprise an overhang, and the second length L₂ of the second layer extends further in the first direction than the first width W₁ of the first layer and the third width W₃ of third layer, and wherein the second layer comprises an overhang,
wherein the overhang of the first layer and the overhang of the third layer each comprises:
a base end (24) even with an edge of the second layer;
a distal end (26) opposite the base end, wherein the overhang tapers from the base end to the distal end;
a first surface (28) extending from the base end to the distal end;
a second surface (30) extending from the base end to the distal end, wherein the first surface and the second surface meet at the distal end, and the first surface and the second surface are each corrugated; and
at least one trough (32) on the first surface and at least one trough on the second surface, wherein each of the at least one troughs extends from the distal end to the base end, and one of the at least one troughs is aligned with a passageway of the second layer.

6. The method of claim 5, further comprising:
forming a fourth layer comprising a fourth length L₄ extending in a sinusoidal shape in the first direction and a second width W₂ extending in a sinusoidal shape in the second direction.

7. The method of claim 6, further comprising:
additively manufacturing the first layer, the second layer, the third layer, and the fourth layer.

8. The method of claim 6 or 7, wherein the first layer, the second layer, the third layer, and the fourth layer are continuous and monolithic.

## Patentansprüche

1. Wärmetauscher, umfassend:
eine erste Schicht (12), wobei die erste Schicht Folgendes umfasst:
eine erste Breite W₁, die sich in einer ersten Richtung erstreckt; und
eine erste Länge L₁, die sich in einer zweiten Richtung erstreckt;
eine zweite Schicht (14), wobei die zweite Schicht Folgendes umfasst:
eine zweite Länge L₂, die sich in der ersten Richtung erstreckt; eine zweite Breite W₂, die sich in der zweiten Richtung erstreckt; und
mindestens einen Kanal (22), der sich von einer Kante der zweiten Schicht durch eine gegenüberliegende Kante der zweiten Schicht in der zweiten Richtung erstreckt; und
eine dritte Schicht (16), wobei die dritte Schicht eine dritte Breite W₃ umfasst, die sich in der ersten Richtung erstreckt, und eine dritte Länge L₃, die sich in der zweiten Richtung erstreckt, wobei sich die zweite Schicht zwischen der ersten Schicht und der dritten Schicht befindet, wobei sich die erste Länge L₁ der ersten Schicht und die dritte Länge L₃ der dritten Schicht beide weiter in der zweiten Richtung erstrecken als die zweite Breite W₂ der zweiten Schicht und wobei die erste Schicht und die dritte Schicht jeweils einen Überhang (20) umfassen;
wobei der Überhang der ersten Schicht und der Überhang der dritten Schicht jeweils Folgendes umfassen:
ein Basisende (24), das mit einer Kante der zweiten Schicht gleich ist;
ein distales Ende (26) gegenüber dem Basisende, wobei sich der Überhang von dem Basisende zu dem distalen Ende verjüngt;
eine erste Fläche (28), die sich von dem Basisende zu dem distalen Ende erstreckt;
eine zweite Fläche (30), die sich von dem Basisende zu dem distalen Ende erstreckt, wobei die erste Fläche und die zweite Fläche an dem distalen Ende aufeinandertreffen und die erste Fläche und die zweite Fläche jeweils gewellt sind; und
mindestens ein Wellental (32) an der ersten Fläche und mindestens ein Wellental an der zweiten Fläche, wobei sich jedes des mindestens einen Wellentals von dem distalen Ende zu dem Basisende erstreckt und eines von dem mindestens einen Wellental an einem Durchgang der zweiten Schicht ausgerichtet ist; wobei sich die zweite Länge L2 der zweiten Schicht weiter in der ersten Richtung erstreckt als die erste Breite W1 der ersten Schicht und die dritte Breite W3 der dritten Schicht und wobei die zweite Schicht einen Überhang (20) umfasst; und wobei der Überhang der ersten Schicht ferner eine sinusförmige Kurve in der ersten Richtung und eine sinusförmige Kurve in der zweiten Richtung umfasst.

2. Wärmetauscher nach einem der vorhergehenden Ansprüche, wobei der Überhang der dritten Schicht ferner eine sinusförmige Kurve in der ersten Richtung und eine sinusförmige Kurve in der zweiten Richtung umfasst.

3. Wärmetauscher nach Anspruch 1 oder einem davon abhängigen Anspruch, wobei der Überhang der zweiten Schicht eine sinusförmige Kurve in der ersten Richtung und eine sinusförmige Kurve in der zweiten Richtung umfasst.

4. Wärmetauscher nach einem der vorhergehenden Ansprüche, wobei die erste Schicht, die zweite Schicht und die dritte Schicht durch additive Fertigung konstruiert sind, sodass der Wärmetauscher eine kontinuierliche und monolithische Komponente ist.

5. Verfahren zum Herstellen eines Wärmetauschers nach Anspruch 1, wobei das Verfahren Folgendes umfasst:
Bilden einer ersten Schicht, umfassend eine erste Breite W₁, die sich in einer sinusförmigen Form in einer ersten Richtung erstreckt, und eine erste Länge L₁, die sich in einer sinusförmigen Form in einer zweiten Richtung erstreckt;
Bilden einer zweiten Schicht, umfassend eine zweite Länge L₂, die sich in einer sinusförmigen Form in der ersten Richtung erstreckt, und eine zweite Breite W₂, die sich in einer sinusförmigen Form in der zweiten Richtung erstreckt; und
Bilden einer dritten Schicht, umfassend eine dritte Breite W₃, die sich in einer sinusförmigen Form in der ersten Richtung erstreckt, und eine dritte Länge L₃, die sich in einer sinusförmigen Form in der zweiten Richtung erstreckt; wobei die zweite Schicht zwischen der ersten Schicht und der zweiten Schicht ist und wobei sich die erste Länge L₁ der ersten Schicht und die dritte Länge L₃ der dritten Schicht beide weiter in der zweiten Richtung erstrecken als die zweite Breite W₂ der zweiten Schicht und die erste Schicht und die dritte Schicht jeweils einen Überhang umfassen und sich die zweite Länge L₂ der zweiten Schicht weiter in der ersten Richtung erstreckt als erste Breite W₁ der ersten Schicht und die dritte Breite W₃ der dritten Schicht und wobei die zweite Schicht einen Überhang umfasst, wobei der Überhang der ersten Schicht und der Überhang der dritten Schicht jeweils Folgendes umfassen:
ein Basisende (24), das mit einer Kante der zweiten Schicht gleich ist;
ein distales Ende (26) gegenüber dem Basisende, wobei sich der Überhang von dem Basisende zu dem distalen Ende verjüngt;
eine erste Fläche (28), die sich von dem Basisende zu dem distalen Ende erstreckt;
eine zweite Fläche (30), die sich von dem Basisende zu dem distalen Ende erstreckt, wobei die erste Fläche und die zweite Fläche an dem distalen Ende aufeinandertreffen und die erste Fläche und die zweite Fläche jeweils gewellt sind; und
mindestens ein Wellental (32) an der ersten Fläche und mindestens ein Wellental an der zweiten Fläche, wobei sich jedes des mindestens einen Wellentals von dem distalen Ende zu dem Basisende erstreckt und eines von dem mindestens einen Wellental an einem Durchgang der zweiten Schicht ausgerichtet ist.

6. Verfahren nach Anspruch 5, weiterhin umfassend:
Bilden einer vierten Schicht, umfassend eine vierte Länge L4, die sich in einer sinusförmigen Form in der ersten Richtung erstreckt, und eine zweite Breite W2, die sich in einer sinusförmigen Form in der zweiten Richtung erstreckt.

7. Verfahren nach Anspruch 6, weiterhin umfassend:
additives Fertigen der ersten Schicht, der zweiten Schicht, der dritten Schicht und der vierten Schicht.

8. Verfahren nach Anspruch 6 oder 7, wobei die erste Schicht, die zweite Schicht, die dritte Schicht und die vierte Schicht kontinuierlich und monolithisch sind.

## Revendications

1. Échangeur de chaleur comprenant :
une première couche (12), dans lequel la première couche comprend :
une première largeur W₁ s'étendant dans une première direction ; et
une première longueur L₁ s'étendant dans une seconde direction ; une deuxième couche (14), dans lequel la deuxième couche comprend :
une deuxième longueur L₂ s'étendant dans la première direction ;
une deuxième largeur W₂ s'étendant dans la seconde direction ; et
au moins un passage (22) s'étendant dans la seconde direction, depuis un bord de la deuxième couche, à travers un bord opposé de la deuxième couche ; et
une troisième couche (16), dans lequel la troisième couche comprend une troisième largeur W₃ s'étendant dans la première direction et une troisième longueur L₃ s'étendant dans la seconde direction, la deuxième couche étant située entre la première couche et la troisième couche, la première longueur L₁ de la première couche et la troisième longueur L₃ de la troisième couche s'étendant toutes deux plus loin dans la seconde direction que la deuxième largeur W₂ de la deuxième couche, et la première couche et la troisième couche comprenant chacune un surplomb (20) ;
dans lequel le surplomb de la première couche et le surplomb de la troisième couche comprennent chacun :
une extrémité de base (24) au même niveau qu'un bord de la deuxième couche ;
une extrémité distale (26) opposée à l'extrémité de base, le surplomb se rétrécissant depuis l'extrémité de base jusqu'à l'extrémité distale ;
une première surface (28) s'étendant de l'extrémité de base à l'extrémité distale ;
une seconde surface (30) s'étendant de l'extrémité de base à l'extrémité distale, la première surface et la seconde surface se rencontrant au niveau de l'extrémité distale, et la première surface et la seconde surface étant chacune ondulées ; et
au moins un creux (32) sur la première surface et au moins un creux sur la seconde surface, chacun parmi l'au moins un creux s'étendant de l'extrémité distale à l'extrémité de base, et l'un parmi l'au moins un creux étant aligné avec un passage de la deuxième couche ; dans lequel la deuxième longueur L2 de la deuxième couche s'étend plus loin dans la première direction que la première largeur Wl de la première couche et de la troisième largeur W3 de la troisième couche, et dans lequel la deuxième couche comprend un surplomb (20) ; et dans lequel le surplomb de la première couche comprend en outre une courbe sinusoïdale dans la première direction et une courbe sinusoïdale dans la seconde direction.

2. Échangeur de chaleur selon une quelconque revendication précédente, dans lequel le surplomb de la troisième couche comprend en outre une courbe sinusoïdale dans la première direction et une courbe sinusoïdale dans la seconde direction.

3. Échangeur de chaleur selon la revendication 1 ou selon une quelconque revendication qui en dépend, dans lequel le surplomb de la deuxième couche comprend une courbe sinusoïdale dans la première direction et une courbe sinusoïdale dans la seconde direction.

4. Échangeur de chaleur selon une quelconque revendication précédente, dans lequel la première couche, la deuxième couche et la troisième couche sont construites par fabrication additive de sorte que l'échangeur de chaleur est un composant continu et monolithique.

5. Procédé de fabrication d'un échangeur de chaleur selon la revendication 1, le procédé comprenant :
la formation d'une première couche comprenant une première largeur W₁ s'étendant selon une forme sinusoïdale dans une première direction et une première longueur L₁ s'étendant selon une forme sinusoïdale dans une seconde direction ;
la formation d'une deuxième couche comprenant une deuxième longueur L₂ s'étendant selon une forme sinusoïdale dans la première direction et une seconde largeur W₂ s'étendant selon une forme sinusoïdale dans la seconde direction ; et
la formation d'une troisième couche comprenant une troisième largeur W₃ s'étendant selon une forme sinusoïdale dans la première direction et une troisième longueur L₃ s'étendant selon une forme sinusoïdale dans la seconde direction, la deuxième couche étant située entre la première couche et la deuxième couche, et dans lequel la première longueur L₁ de la première couche et la troisième longueur L₃ de la troisième couche s'étendent toutes deux plus loin dans la seconde direction que la deuxième largeur W₂ de la deuxième couche et la première couche et la troisième couche comprennent chacune un surplomb, et la deuxième longueur L₂ de la deuxième couche s'étend plus loin dans la première direction que la première largeur W₁ de la première couche et la troisième largeur W₃ de la troisième couche, et dans lequel la deuxième couche comprend un surplomb, dans lequel le surplomb de la première couche et le surplomb de la troisième couche comprennent chacun :
une extrémité de base (24) au même niveau qu'un bord de la deuxième couche ;
une extrémité distale (26) opposée à l'extrémité de base, le surplomb se rétrécissant depuis l'extrémité de base jusqu'à l'extrémité distale ;
une première surface (28) s'étendant de l'extrémité de base à l'extrémité distale ;
une seconde surface (30) s'étendant de l'extrémité de base à l'extrémité distale, la première surface et la seconde surface se rencontrant au niveau de l'extrémité distale, et la première surface et la seconde surface étant chacune ondulées ; et
au moins un creux (32) sur la première surface et au moins un creux sur la seconde surface, chacun parmi l'au moins un creux s'étendant de l'extrémité distale à l'extrémité de base, et l'un parmi l'au moins un creux étant aligné avec un passage de la deuxième couche.

6. Procédé selon la revendication 5 comprenant en outre :
la formation d'une quatrième couche comprenant une quatrième longueur L₄ s'étendant selon une forme sinusoïdale dans la première direction et une deuxième largeur W₂ s'étendant selon une forme sinusoïdale dans la seconde direction.

7. Procédé selon la revendication 6 comprenant en outre :
la fabrication additive de la première couche, de la deuxième couche, de la troisième couche et de la quatrième couche.

8. Procédé selon la revendication 6 ou 7, dans lequel la première couche, la deuxième couche, la troisième couche et la quatrième couche sont continues et monolithiques.
